# EUROPÄISCHE PATENTSCHRIFT

(11) **EP 2 783 453 B1**
(45) Veröffentlichungstag und Bekanntmachung des Hinweises auf die Patenterteilung: **10.01.2018**
(21) Anmeldenummer: 12772094.4
(22) Anmeldetag: 27.09.2012
(51) Int. Cl.: F16C 27/04, F16C 33/10, H02K 5/167, F04B 53/00, F16C 32/06, F16C 21/00

(54) **ELEKTROMOTOR**
ELECTRIC MOTOR
MOTEUR ÉLECTRIQUE

(30) Priorität: 25.11.2011 DE 102011087083
(43) Veröffentlichungstag der Anmeldung: 01.10.2014
(73) Patentinhaber: Robert Bosch GmbH, 70442 Stuttgart (DE)
(72) Erfinder: MICKE, Marc, 74357 Boennigheim (DE); FELLMETH, Reiner, 74354 Besigheim (DE); KLEIN, Stefan, 74226 Nordheim (DE)
(86) Internationale Anmeldenummer: PCT/EP2012/069033
(87) Internationale Veröffentlichungsnummer: WO 2013/075868

(56) Entgegenhaltungen:
- DE-A1- 19 737 045
- DE-A1-102006 042 340
- DE-B- 1 286 344
- JP-A- S5 594 092
- JP-A- H08 296 637
- JP-A- 2002 142 406
- JP-A- 2008 008 412
- US-A- 4 701 651

## Beschreibung

### Stand der Technik

Die Erfindung geht aus von einem Elektromotor nach der Gattung des unabhängigen Patentanspruchs 1.

Elektromotoren der oben genannten Art werden häufig als Antrieb für Hydraulikpumpen in Fahrzeughydrauliksystemen, wie beispielsweise Antiblockiersysteme (ABS) oder Antriebsschlupfregelsysteme (ASR-System) oder elektronische Stabilitätsprogrammsysteme (ESP-System), eingesetzt. Derartige Elektromotoren umfassen verschiedene Lageranordnungen zur Lagerung einer Ankerwelle sowohl in radialer als auch in axialer Richtung. Üblicherweise weisen diese Lageranordnungen sowohl so genannte Festlager als auch so genannte Loslager auf. Häufig verursachen diese Lageranordnungen unerwünschte Geräuschentwicklungen während des Betriebs des Elektromotors.

In der JP 2002 142406 A wird ein Elektromotor mit einem begrenzten Drehwinkel beschrieben. Der beschriebene Elektromotor umfasst eine Ankerwelle, welche in mindestens einem Loslager gelagert ist, wobei das Loslager einen Lagerinnenring und einen Lageraußenring umfasst, welcher in einem Lagersitz aufgenommen ist. Der Lagerinnenring ist über eine Buchse, welche aus einem zylindrischen Teil und einem scheibenförmigen Teil besteht, mit der Ankerwelle gekoppelt. Hierbei ist der zylindrische Teil der Buchse auf die Ankerwelle aufgeschoben und der Lagerinnenring liegt am Außenumfang des scheibenförmigen Teils der Buchse an. An der Innenfläche des zylindrischen Teils sind Rillen angeordnet, welche Schmiermittel führen, um zwischen dem zylindrischen Teil der Buchse und der Ankerwelle einen hydrodynamischen Schmiermittelfilm auszubilden.

In den Dokumenten JP 2008 008412, JP H08 296637 A und JP S55 94092 A werden jeweils Lager für drehende Wellen beschrieben, welche ein Kugellager mit einem Gleitlager kombinieren. Hierbei ist ein Außenring des jeweiligen Lagers in einem Lagersitz fixiert und ein Innenring des Lagers kann gegenüber der Welle gleitend rotieren, wobei während des Betriebs über eine entsprechende Zuführung fortlaufend Schmiermittel eingebracht wird, welches auf der Gleitfläche einen hydrodynamischen Schmierfilm ausbildet. Ab einer kritischen Rotationsgeschwindigkeit übernimmt das Gleitlager bzw. der Innenring die Rotationsgeschwindigkeit der Welle, so dass eine konstante Relativbewegung zwischen der Welle und dem Lagerinnenring entsteht.

In der US 4,701,651 A wird ein zwischen einer Welle und einem Gehäuse ausgebildetes Gleitlager beschrieben. In die Welle sind Rillen eingebracht, welche Schmiermittel führen, um zwischen dem Gehäuse und der Welle einen hydrodynamischen Schmiermittelfilm auszubilden.

In der Offenlegungsschrift DE 10 2006 042 340 A1 wird beispielsweise ein Elektromotor mit einer Ankerwelle beschrieben, welche in einer Lageranordnung aufgenommen ist. Die Ankerwelle ist hierbei in zumindest einem Loslager gelagert, welches einen Lagerinnenring, welcher auf der Ankerwelle angeordnet ist, und einen Lageraußenring umfasst, welcher in einem Lagersitz aufgenommen ist.

### Offenbarung der Erfindung

Der erfindungsgemäße Elektromotor mit den Merkmalen des unabhängigen Patentanspruchs 1 und die erfindungsgemäße Fluidpumpe mit den Merkmalen des unabhängigen Patentanspruchs 5 haben demgegenüber den Vorteil, dass bei der Montage zwischen der Antriebswelle und dem Lagerinnenring Schmiermittel eingebracht ist, welches einen hydrodynamischen Schmiermittelfilm ausbildet und eine konstante Relativbewegung zwischen der Antriebswelle und dem Lagerinnenring erzeugt. In vorteilhafter Weise ist somit während des Betriebs des Elektromotors eine permanente Versorgung mit eingebrachtem Schmiermittel gewährleistet, wodurch die Antriebswelle und der Lagerinnenring einen konstanten Schlupf aufweisen. Infolgedessen ermöglicht der hydrodynamische Schmiermittelfilm während des Betriebs des Elektromotors eine konstante Relativbewegung zwischen der Antriebswelle und dem Lagerinnenring, womit nicht nur die Radialbelastungen zwischen der Antriebswelle und dem Lagerinnenring gedämpft sondern auch eine deutliche Geräuschminderung des Elektromotors erzielt werden kann. Die Antriebswelle rotiert koaxial mit dem Loslager innerhalb des Lagerinnenrings nahezu reibungsfrei, wodurch sich eine Reduktion der Belastung der Antriebswelle bzw. des Lagerinnenrings und eine Minderung des Verschleißes des erfindungsgemäßen Elektromotors ergeben. Aufgrund des erzeugten erfindungsgemäßen Schmierfilms weisen Ausführungsformen des erfindungsgemäßen Elektromotors eine höhere Belastbarkeit auf, wodurch die Laufzeit bzw. die Lebensdauer des Elektromotors erhöht werden können. In vorteilhafter Weise sind keine zusätzlichen Bauteile erforderlich, um den hydrodynamischen Schmiermittelfilm auszubilden und eine konstante Relativbewegung zwischen der Antriebswelle und dem Lagerinnenring zu erreichen, so dass zur Verbesserung des Geräuschverhaltens des Elektromotors keine zusätzlichen Herstellungskosten für zusätzliche Bauteile entstehen.

Erfindungsgemäß ist das Loslager als Wälzlager ausgeführt. Ein wesentlicher Vorteil eines Wälzlagers besteht darin, dass dieses eine Antriebswelle fixieren kann, wobei das Wälzlager die radialen und axialen Kräfte aufnehmen und gleichzeitig eine Rotation der Antriebswelle und der auf der Antriebswelle gelagerten Bauteile, wie beispielsweise ein Kommutator oder Ankerwicklungen, ermöglicht. Durch den Einsatz eines Wälzlagers können insbesondere Reibungskräfte reduziert werden, so dass die Verlustleistung des Elektromotors und der Verschleiß gesenkt werden können. Da die Wälzkörper im Lagerinnenring und Lageraußenring üblicherweise auf gehärteten Stahlflächen mit optimierter Schmierung abrollen, ist die Rollreibung und damit die Geräuschentwicklung dieser Lager relativ gering. Ein wesentlicher Vorteil des Wälzlagers ist der geringe Schmierungsbedarf, wodurch diese im Elektromotor bei hohen Lasten reibungsarm arbeiten können und sich insbesondere für den Einsatz bei häufig ändernden Drehzahlen eignen.

Durch die in den abhängigen Ansprüchen aufgeführten Maßnahmen und Weiterbildungen sind vorteilhafte Verbesserungen des im unabhängigen Patentanspruch 1 angegebenen Elektromotors möglich.

Besonders vorteilhaft ist, dass der hydrodynamische Schmiermittelfilm durch eine Benetzung des Lagerinnenrings mit Schmiermittel ausgebildet werden kann. In vorteilhafter Weise kann der Schmierstoff auf Grund der Kapillarwirkung und der Relativbewegung der beiden Kontaktflächen der Antriebswelle und des Lagerinnenring zueinander schnell in den sich verengenden Schmierspalt gefördert werden. Der dabei entstehende Druck im Schmiermittelfilm ist so hoch, dass sich die Kontaktflächen trennen, wodurch zwischen der Antriebswelle und dem Lagerinnenring eine konstante Relativbewegung erreicht werden kann. Während des Betriebs des Elektromotors ist eine gleichmäßige radiale Benetzung des Lagerinnenrings mit eingebrachtem Schmiermittel möglich. Eine permanente Benetzung der Innenfläche des Lagerinnenrings mit Schmiermittel gewährleistet einen kontinuierlichen Schmiermittelfilm, der nicht abreißen kann. Das Loslager im Elektromotor ist dabei so kompakt und kleinbauend ausgeführt, dass eine kleine Menge des Schmiermittels ausreicht, um auf Dauer den gewünschten Effekt einer gleichmäßigen Benetzung des Lagerinnenrings durch Schmiermittel und somit einer Geräuschminderung zu erzielen. Eine permanente Benetzung des Lagerinnenrings mit Schmiermittel gewährleistet einen Schmiermittelfilm, wodurch der Verschleiß und die Geräuschentwicklung stark reduziert werden kann.

Das Schmiermittel kann beispielsweise als Öl und/oder Fett ausgeführt werden. In vorteilhafter Weise bildet sich bei der Verwendung von Öl und/oder Fett als Schmiermittel sehr schnell ein hydrodynamischer Schmiermittelfilm, welcher einen Materialverschleiß zwischen den beiden Kontaktflächen und eine Geräuschentwicklung wirkungsvoll verhindern kann. Bei einer idealen Schmierung durch Öl und/oder Fett kann insbesondere eine Verringerung von Reibung und Materialverschleiß zwischen zwei Kontaktflächen, die sich relativ zueinander bewegen, erreicht werden. Da das Schmiermittel einen direkten Kontakt zwischen den beiden Kontaktflächen der Antriebswelle und des Lagerinnenrings wirkungsvoll während des Betriebs des Elektromotors verhindert bzw. überbrückt, kann in vorteilhafter Weise kein ein metallisches Geräusch verursachender Kontakt entstehen, wodurch eine deutliche Geräuschreduktion des erfindungsgemäßen Elektromotors möglich ist.

In weiterer Ausgestaltung des erfindungsgemäßen Elektromotors ist die Menge des Schmiermittels so gewählt, dass ein geschlossener hydrodynamischer Schmiermittelfilm ausgebildet ist. Hierdurch kann sich in vorteilhafter Weise immer ein idealer hydrodynamischer Schmiermittelfilm während des Betriebs des Elektromotors bilden und somit eine optimale konstante Relativbewegung zwischen Antriebswelle und Lagerinnenring eingestellt werden.

In vorteilhafter Weise kann der erfindungsgemäße geräuschreduzierte Elektromotor als Antrieb für eine Fluidpumpe in einem Fahrzeugfluidsystem, vorzugsweise als Antrieb für eine Rückstellpumpe in einem Fahrzeugbremssystem eingesetzt werden. Grundsätzlich können Ausführungsformen des erfindungsgemäßen Elektromotors auch als elektrische Antriebe für andere Systeme insbesondere in einem Kraftfahrzeug eingesetzt werden.

Ein Ausführungsbeispiel der Erfindung ist in den Zeichnungen dargestellt und wird in der nachfolgenden Beschreibung näher erläutert. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine Explosionsdarstellung eines Ausführungsbeispiels eines erfindungsgemäßen Elektromotors mit einer Ankerwelle, welche in einem Loslager gelagert ist, welches in einem Lagersitz eines Polgehäuses aufgenommen ist, wobei zwischen der Ankerwelle und dem Loslager ein Schmiermittelfilm ausgebildet ist.
Fig. 2 zeigt eine perspektivische Darstellung des Loslagers des erfindungsgemäßen Elektromotors aus Fig. 1 vor der Montage der Ankerwelle mit am Lagerinnenring eingebrachtem Schmiermittel.
Fig. 3 zeigt eine perspektivische Darstellung des Loslagers des Elektromotors aus Fig. 1 mit montierter Ankerwelle.

### Ausführungsformen der Erfindung

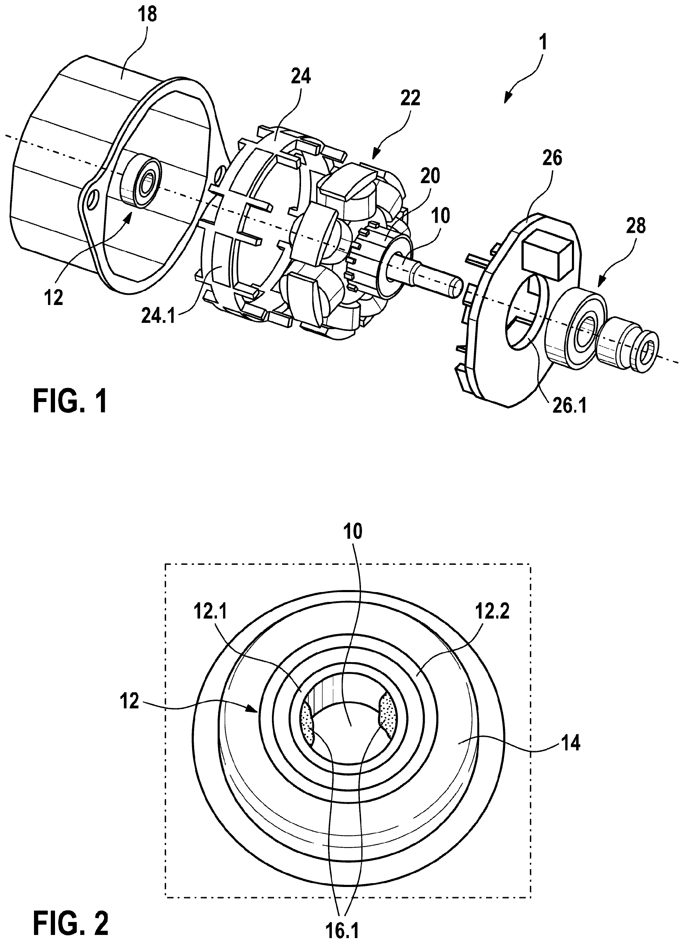

Fig. 1 zeigt einen erfindungsgemäßen Elektromotor 1, welcher vorzugsweise als Antrieb für eine Hydraulikpumpe in einem Fahrzeughydrauliksystem eingesetzt werden kann, wenngleich Ausführungsformen des erfindungsgemäßen Elektromotors 1 grundsätzlich auch als Antriebe für andere Kraftfahrzeugsysteme eingesetzt werden können.

Wie aus Fig. 1 ersichtlich ist, umfasst der Elektromotor 1 eine Ankerwelle 10, welche in einem Loslager 12 innerhalb eines topfförmigen Polgehäuses 18 drehbar gelagert ist. Im Polgehäuse 18 sind ein an der Ankerwelle 10 angeordneter Kommutator 20 mit Anker 22 und ein Magnethaltering 24 mit Magneten 24.1 untergebracht. Stirnseitig deckt ein deckelförmiger Bürstenträger 26 mit einem für die Aufnahme der Ankerwelle 10 und eines zweiten Lagers 28 mittigen Durchbruch 26.1 das Polgehäuse 18 ab.

Wie aus Fig. 2 ersichtlich ist, ist das Loslager 12 im dargestellten Ausführungsbeispiel als Wälzlager ausgeführt und umfasst neben den Wälzkörpern einen Lagerinnenring 12.1 und einen Lageraußenring 12.2.

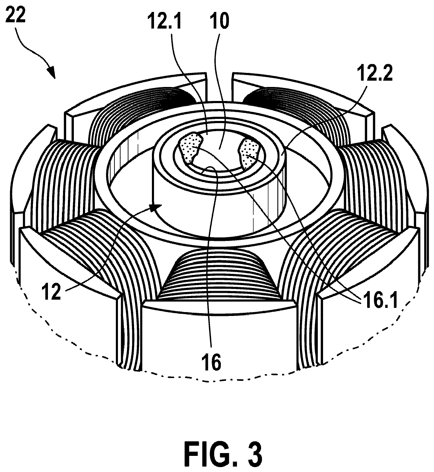

Wie aus Fig. 3 ersichtlich ist, ist der Lagerinnenring 12.1 auf die Ankerwelle 10 aufgeschoben und/oder mittels eines Sicherungselements axial gesichert. Der Lageraußenring 12.2 ist in einem hier nicht sichtbaren Lagersitz des Polgehäuses 18 aufgenommen.

Um einen Elektromotor 1 mit gedämpfter Radialbelastung und einer verringerten Geräuschemission zu ermöglichen, ist erfindungsgemäß zwischen der Antriebswelle 10 und dem Lagerinnenring 12.1 Schmiermittel 16.1 eingebracht, welches einen hydrodynamischen Schmiermittelfilm 16 ausbildet und eine konstante Relativbewegung zwischen Antriebswelle 10 und Lagerinnenring 12.1 erzeugt.

Zur Sicherstellung eines definierten Schmierzustands wird der hydrodynamische Schmiermittelfilm 16 durch eine Benetzung des Lagerinnenrings 12.1 mit Schmiermittel 16.1 ausgebildet. Bei der Montage wird zwischen der Antriebswelle 10 und dem Wälzlager 12 vorzugsweise als Öl und/oder Fett ausgeführtes Schmiermittel 16.1 aufgebracht. Die Menge des Schmiermittels 16.1 ist so gewählt, dass ein geschlossener hydrodynamischer Schmiermittelfilm 16 ausgebildet ist. In vorteilhafter Weise entsteht während des Betriebs des Elektromotors ein geringer Bedarf des Schmiermittels 16.1, wodurch die aufgebrachte Menge des Schmiermittels 16.1 eine gute Schmierung über einen längeren Zeitraum gewährleistet. Auf Grund der guten Zugänglichkeit des Loslagers 12 kann bei Bedarf jederzeit Schmiermittel 16.1 nachträglich aufgebracht werden. Zwischen der Antriebswelle 10 und dem Wälzlager 12 bildet sich aufgrund des hydrodynamischen Schmiermittelfilms 16 eine konstante Relativbewegung mit einem konstanten Schlupf zwischen der Antriebswelle 10 und dem Wälzlager 12 und einer geringen Geräuschentwicklung aus.

## Patentansprüche

1. Elektromotor mit einer Ankerwelle (10), welche in mindestens einem Loslager (12) gelagert ist, wobei das Loslager (12) einen Lagerinnenring (12.1), welcher auf der Ankerwelle (10) angeordnet ist, und einen Lageraußenring (12.2) umfasst, welcher in einem Lagersitz (14) aufgenommen ist, wobei das Loslager (12) als Wälzlager ausgeführt ist, **dadurch gekennzeichnet, dass** bei der Montage zwischen der Antriebswelle (10) und dem Lagerinnenring (12.1) Schmiermittel (16.1) eingebracht ist, welches während des Betriebs des Elektromotors (1) einen hydrodynamischen Schmiermittelfilm (16) ausbildet und eine konstante Relativbewegung zwischen Antriebswelle (10) und Lagerinnenring (12.1) erzeugt.

2. Elektromotor nach Anspruch 1, **dadurch gekennzeichnet, dass** der hydrodynamische Schmiermittelfilm (16) durch eine Benetzung des Lagerinnenrings (12.1) mit Schmiermittel (16.1) ausgebildet ist.

3. Elektromotor nach Anspruch 1 oder 2, **dadurch gekennzeichnet, dass** das Schmiermittel (16.1) als Öl und/oder Fett ausgeführt ist.

4. Elektromotor nach einem der Ansprüche 1 bis 3, **dadurch gekennzeichnet, dass** die Menge des Schmiermittels (16.1) so gewählt ist, dass ein geschlossener hydrodynamischer Schmiermittelfilm (16) ausgebildet ist.

5. Fluidpumpe für ein Fahrzeugfluidsystem mit einem elektrischen Antrieb (1), **dadurch gekennzeichnet, dass** der elektrische Antrieb (1) als Elektromotor nach einem der Ansprüche 1 bis 4 ausgeführt ist.

## Claims

1. Electric motor having an armature shaft (10) which is mounted in at least one floating bearing (12), the floating bearing (12) comprising a bearing inner ring (12.1) which is arranged on the armature shaft (10) and a bearing outer ring (12.2) which is received in a bearing seat (14), the floating bearing (12) being configured as an antifriction bearing, **characterized in that**, during mounting, lubricant (16.1) is introduced between the drive shaft (10) and the bearing inner ring (12.1), which lubricant (16.1), during the operation of the electric motor, forms a hydrodynamic lubricant film (16) and generates a constant relative movement between the drive shaft (10) and the bearing inner ring (12.1).

2. Electric motor according to Claim 1, **characterized in that** the hydrodynamic lubricant film (16) is formed by way of wetting of the bearing inner ring (12.1) with lubricant (16.1).

3. Electric motor according to Claim 1 or 2, **characterized in that** the lubricant (16.1) is configured as oil and/or grease.

4. Electric motor according to one of Claims 1 to 3, **characterized in that** the quantity of the lubricant (16.1) is selected in such a way that a closed hydrodynamic lubricant film (16) is formed.

5. Fluid pump for a vehicle fluid system having an electric drive (1), **characterized in that** the electric drive (1) is configured as an electric motor according to one of Claims 1 to 4.

## Revendications

1. Moteur électrique comprenant un arbre d'induit (10) qui est supporté dans au moins un palier libre (12), le palier libre (12) comprenant une bague intérieure de palier (12.1) qui est disposée sur l'arbre d'induit (10), et une bague extérieure de palier (12.2) qui est reçue dans un siège de palier (14), le palier libre (12) étant réalisé sous forme de palier à roulement, **caractérisé en ce que** lors du montage, du lubrifiant (16.1) est introduit entre l'arbre d'entraînement (10) et la bague intérieure de palier (12.1), lequel constitue un film de lubrifiant hydrodynamique (16) pendant le fonctionnement du moteur électrique (1) et génère un mouvement relatif constant entre l'arbre d'entraînement (10) et la bague intérieure de palier (12.1).

2. Moteur électrique selon la revendication 1, **caractérisé en ce que** le film de lubrifiant hydrodynamique (16) est réalisé par un mouillage de la bague intérieure de palier (12.1) avec du lubrifiant (16.1).

3. Moteur électrique selon la revendication 1 ou 2, **caractérisé en ce que** le lubrifiant (16.1) est réalisé sous forme d'huile et/ou de graisse.

4. Moteur électrique selon l'une quelconque des revendications 1 à 3, **caractérisé en ce que** la quantité de lubrifiant (16.1) est choisie de telle sorte qu'un film de lubrifiant hydrodynamique fermé (16) soit formé.

5. Pompe de fluide pour un système fluidique d'un véhicule comprenant un entraînement électrique (1), **caractérisée en ce que** l'entraînement électrique (1) est réalisé sous forme de moteur électrique selon l'une quelconque des revendications 1 à 4.
